(19)

Europäisches
Patentamt
European
Patent Office
Office européen
des brevets

(11) **EP 2 126 408 B1**

(12) **EUROPEAN PATENT SPECIFICATION**

(45) Date of publication and mention
of the grant of the patent:
**01.06.2011 Bulletin 2011/22**

(21) Application number: **07852311.5**

(22) Date of filing: **13.12.2007**

(51) Int Cl.:
*F16H 1/16* (2006.01)  *F16H 1/24* (2006.01)
*F16H 55/08* (2006.01)  *F16H 55/22* (2006.01)

(86) International application number:
**PCT/SI2007/000044**

(87) International publication number:
**WO 2008/073061 (19.06.2008 Gazette 2008/25)**

(54) **PARABOLIC TYPE CYLINDRICAL WORM GEAR PAIR**

PARABOLISCHER ZYLINDERSCHNECKENRADSATZ

PAIRE VIS SANS FIN/ENGRENAGE CYLINDRIQUE DE TYPE PARABOLIQUE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **15.12.2006 SI 200600285**

(43) Date of publication of application:
**02.12.2009 Bulletin 2009/49**

(73) Proprietors:
• **Hlebanja, Gorazd**
 **1000 Ljubljana (SI)**
• **Hlebanja, Joze**
 **1000 Ljubljana (SI)**

(72) Inventors:
• **Hlebanja, Gorazd**
 **1000 Ljubljana (SI)**
• **Hlebanja, Joze**
 **1000 Ljubljana (SI)**

(74) Representative: **Borstar, Dusan**
 **Nova ulica 11**
 **1230 Domzale (SI)**

(56) References cited:
**WO-A-99/58878     DE-A1- 1 960 464
DE-B1- 2 103 537**

**Description**

Cylindrical worm gear pairs belong to the field of machine parts and to the subfield of geared power transmitters, which are mostly used in gearing down from a faster worm shaft to a slower worm gear shaft. A common feature of worm gear pairs is in their ability of transmission of rotation and power between rectangular skew shaft axes. Relative movement between a worm and a worm gear is prevailing performed by sliding lubricated surfaces of teeth flanks, power losses depend on magnitude of friction which further depend on lubrication. A lubricating film depends on shape and size of contacting surfaces of teeth flanks, which are further conditioned with a shape of teeth flanks which is the object of this invention.

The purpose of the invention is to improve sliding and lubricating features by means of increasing the active working surface between the worm teeth and the worm gear teeth.

The closest prior art document DE 21 03 537 B1 discloses a worm gear pair with an at least approximately cylindrical worm and an at least approximately worm gear, which both comprise correspondingly to each other adjusted tooth flanks in the form of arc and appropriate path of contact within the load transmission area. Each flank of the worm tooth consists of at least two areas, which cooperate with worm gear tooth flanks, namely the first area, which is inclined with respect to the line extending perpendicularly with respect to the worm axis and is either linear or may also be slightly convex or concave curved, as well of the second area, which is intensively curved, so that the path of contact is reversed within the load bearing area.

Such concept should improve transmission of torque on the basis of improvement of sliding properties between the worm and the worm gear. Due to the fact that each tooth flank consists of two areas, each contact between the worm tooth flank and the worm gear tooth flank is actually a two-phase contact. When in the first phase the first area of the worm tooth flank and each belonging worm gear flank are in contact, the lubricant is feed into a gap between them. Upon that, during the second phase of said contact, the gap between both corresponding flanks is gradually reduced, so that the lubricant is exposed to increased pressure, which supports progression of the lubricant along the contact area, by which the lubricating is improved.

Consequently, DE 21 03 537 B1 actually proposes an approach, how to assure intensive lubrication regardless to each disposable active contact surface between the worm tooth and the worm gear tooth and regardless to the fact that such contact may be established between a two-part worm gear tooth flank, which is either linear or convex or concave, and each corresponding worm tooth flank, It is however clear that each variation of just one tooth flank from its concave to convex profile involves either increasing or decreasing of active contact surface between the worm and the worm gear, which is directly correlated with increasing or decreasing of contact stresses between each corresponding tooth flanks and correspondingly to admissible loadings which the worm gear as such is then capable to transmit. Moreover, thickness of teeth may also be reduced, which may even result in essential weakening of bending resistance thereof. Besides, manufacturing of such tooth flanks is also deemed to be pretty difficult, since very special manufacturing tools are required.

In addition to that, numerous practical solutions of worm gear pairs have been employed in this regard, and reported in handbooks, manuals, standards, and scientific papers.

However, in order to evaluate this proposal of worm gear pair teeth shape Niemann's and Winter's book Maschinenelemente, Band 3 is of the utmost importance; the most important worm gearing solutions are discussed and corresponding manufacturing processes shaping teeth flanks are considered as well.

*ZA-worm gear set,* where the shape of worm gear (pair) teeth flanks is defined by a turning cutter profile, which is trapezoidal in the worm's axial plane;
*ZN-worm gear set,* where the shape of worm gear (pair) teeth flanks is defined by a turning cutter profile, which is trapezoidal in the worm's normal plane;
*ZK-worm gear set,* where a gearing cutting tool is shaped as a double truncated cone (milling and grinding plate), and its axis is turned against the worm axis for the angle defining a pitch of the worm helix;
*Zl-worm gear set,* where a worm is essentially an involute gear with the inclination angle which is complementary to the pitch of its helix; teeth flanks in their front view are involute in this case;
*ZH-worm gear set* is characterized by a concave circular worm teeth shape and complementary convex worm gear teeth enabling concave-convex contact; commercial trademark is *Cavex* of the *Flender* company;
*Holroyd worm gear set* is characterized by a special shape (based on an involute tooth, British standard 7121) of the worm thread and corresponding worm gear teeth shape; this shape type enables better contact between teeth flanks and thus better lubrication;
*ZS-worm gear set,* where teeth flanks are defined by a specially (S-shaped) designed path of contact, patented in Slovenia under SI-21811.

The weak point of all worm gear pairs is their sliding friction and consequently limited load capacity, relatively low efficiency and wear depending on lubrication quality. The listed disadvantages are considerably lower in *Cavex* and *Holroyd* worm gear pairs due to their convex-concave teeth flanks contact.

The sliding and lubricating features of worm gear transmissions could be considerably improved by concave-convex teeth flanks fit of a worm gear pair and by increased active working surface between worm and worm gear teeth. Such enlarged active surface is assured by a worm gear pair produced in compliance with the solution proposed in this invention.

The previously mentioned technical problem is resolved by means of a parabolic type cylindrical worm gear pair in accordance with the independent claim.

In order to explain the invention the design schematics will be employed, in which

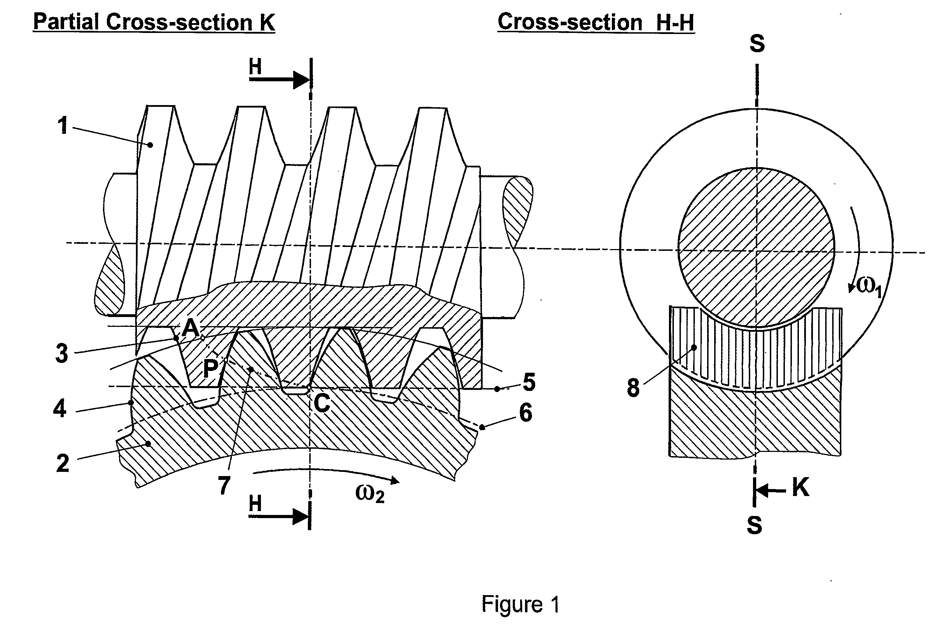

Fig. 1    illustrates a worm gear pair, where a worm is represented in the axial cross- section K (cross-section S-S) through the worm axis in the front view and in the cross-section H in the side view, and a worm gear is represented only by its rim in both, the front and the side view;

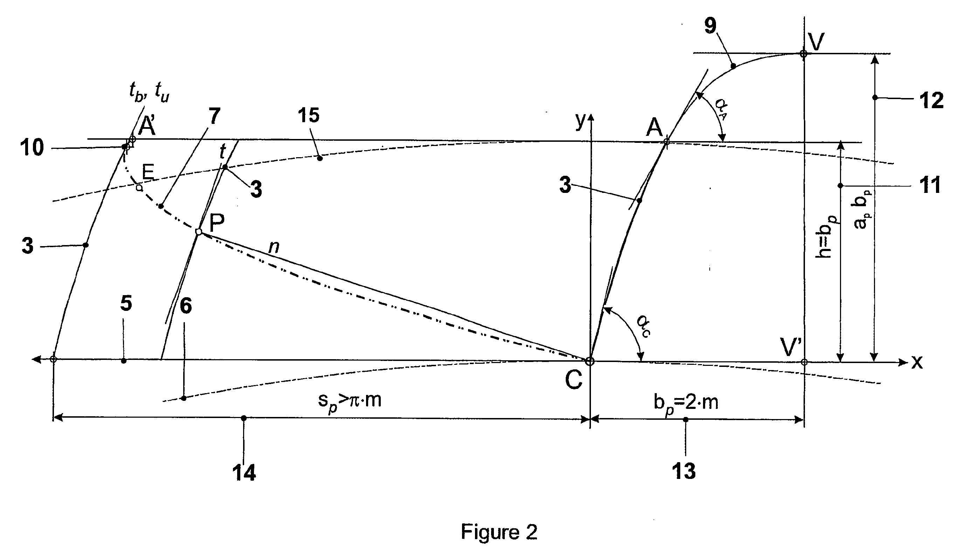

Fig. 2    shows a mathematically defined (Eq. 1) curve in which its part A-C of the height y=h is employed as a profile of the worm tooth profile in the axial cross-section and is essential to this invention, wherein the defined worm tooth profile defines according to the basic law of gearing the corresponding path of contact as well as the worm gear tooth profile;

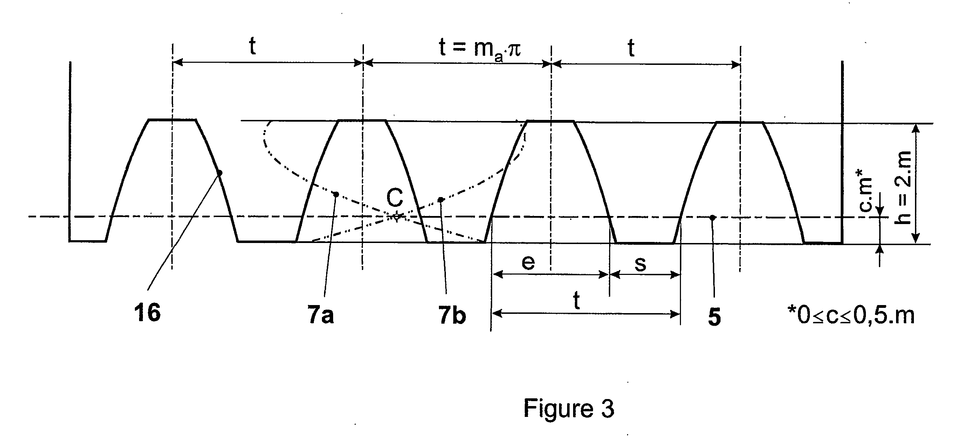

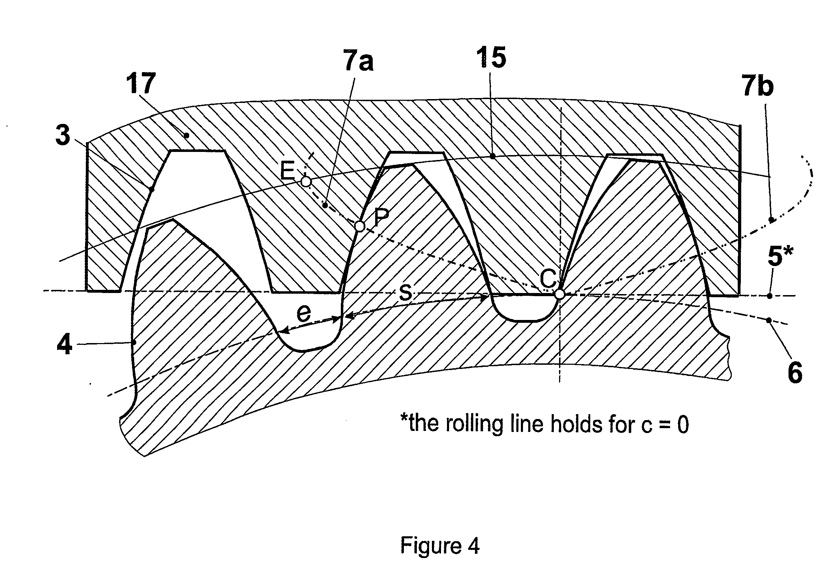

Fig 3    exhibits the rack profile, where its teeth flanks are profiled equivalently to the worm teeth flanks profile from Fig. 2, wherein the generating pitch line is a line of the rack profile rolling on the pitch circle in the pitch point C when worm gear teeth are generated (Fig.4), and wherein, as indicated in Fig. 3, the pitch line can be shifted down for a value c; while

Fig. 4    illustrates the rack profile (Fig. 3) related to teeth of the worm gear in the axial cross-section.

The subject of this invention is a cylindrical worm gear pair where the curvature of worm teeth flanks increases progressively from its addendum to the dedendum. Such a curvature is assured by a parabolic shape of the worm tooth flank; however, according to the basic law of gearing, the worm gear teeth gain a complementary teeth flank shape.

Such a worm gear pair is illustrated in Fig. 1, where the worm is numbered by 1 and the worm gear by 2. The worm 1 can be left or right threaded; however, the left worm 1 thread-line is presented in Fig. 1. Worm 1 rotation is converting into worm gear 2 rotation by means of their toothing in a constant rotational speed ratio $\omega_1/\omega_2$. The pitch point C is the velocity pole of the relative motion between a worm 1 and a worm gear 2. A path 7 of contact with a corresponding worm 1 tooth profile shape and a worm gear 4 tooth profile shape is presented in the axial cross-section K, Fig.1. The flanks 3, 4 of both teeth are contacting in the point P which is moving along the path 7 of contact from the contact start in the point A to the contact end in the point C. By moving the contact point P each load is being transmitted from the worm 1 right tooth flank 3 to the left tooth flank 4 of the worm gear 2.

The problem solving curve is a generalised parabola of a higher order defined in the following equation:

$$y = a_p \, b_p \left[ 1 - \left( 1 - \frac{x}{b_p} \right)^n \right]$$

where x, *y* denote Cartesian coordinates originating in the pitch point C, and where $a_p$ (marked as 12 In Fig. 4) is a height factor of the curve top in the point V; $b_p$ (marked as 13 in Fig. 4) is a worm 1 tooth flank 3 size factor, generally $b_p$ = 2 m (wherein m is a module); *n* is the exponent of the parabola (according to said equation 1), the magnitude of which is determined by the curve starting angle $\alpha_C$ in C; $\alpha_A$ is the curve angle in A.

Thus, parameter magnitudes for the parabola from Fig. 2 are:

$$a_p = 1{,}4\ b_p; \qquad\qquad b_p = 2\ \text{m}; \qquad\qquad n = 2{,}6658.$$

Furthermore, the inclination of tangents to the parabola is ranging from $\alpha_C$ =75° to $\alpha_A$ 60° for the above values. The inclination range is governed by changing values of *ap* and *n* or $\alpha_C$. The tooth flanks 3, 4 curvatures $1/\rho$ are progressively increasing from C to A due to the defining parabola and thus assure convex-concave surface contact. This also implies larger tooth flanks 3, 4 contact surface In general and the largest area in A. Thus, such a worm gear pair 1, 2 exhibits better lubrication circumstances and better loading capacity.

The module m is a standard measure of a worm 1 and a worm gear 2 teeth height *h* which is defined by

$$h \sim 2\,m = b_p$$

For accurate operation of such worm gear pair 1, 2 its length of action (Fig. 2) should exceed its pitch:

$$s_p > m_a \cdot \pi$$

However, the worm gear pair 1, 2 operates in both directions, so that the length of a worm 1, which is marked with L in the subsequent formula, should be at least:

$$L = 2 \cdot s_p$$

Fig 4, representing the proposed gear pair 1, 2 in the axial cross-section through the worm 1 axis, illustrates its operation. Taken that the power transmission flows from a worm 1 tooth flank 3 to a worm gear 2 tooth flank 4, then the contact starts in the point E, i.e. where the tip circle intersects the path of contact 7a, 7b. Afterwards the contact point P moves to C, where the contact ends. Therefore the active length of the path of contact is limited with both end points, namely C and E, and depends on the teeth number of a worm gear. By employing a tooth profile of worm 1, tooth profile of worm gear 2 is produced in a conjugate action if the generating rack pitch line 5 rolls over the pitch circle 6 in the pitch point C.

Fig. 4 also clearly exhibits the concave shape of a worm 1 tooth flank 3 with a curvature radius $\rho_1$ and the convex shape of a worm gear 2 tooth flank 4 with a curvature radius $\rho_2$. A convex-concave contact is characterised by a close contact quantified with the reduced radius of curvature pried:

$$\rho_{red} = \frac{\rho_1 \cdot \rho_2}{\rho_1 - \rho_2}$$

In this case the difference $\rho_1$-$\rho_2$ is small, which implies higher $\rho_{red}$ and thus lower Hertzian pressure and better lubrication Due to the particularly curved tooth flank 3, the difference $\rho_1$-$\rho_2$ in the contact start point E is the lowest. Consequently lubrication in this point is the best and the oil is squeezed in the movement direction which helps maintaining the oil film between surfaces.

To be able to use the same tool in worm gear 2 production of an equal module *m* and dissimilar teeth number or in multiple threaded worm 1 production, tools defined in normal module $m_n$ are employed. Nevertheless, a rack and a pitch in the axial section should be in the axial module $m_a$. The relation between $m_a$ and $m_n$ is:

$$m_n = m_a \cdot \cos \gamma$$

where γ stands for the lead angle of the worm 1 tread.

Besides, the proposed solution enables a contact in the entire active area 8 of teeth flanks 3, 4, as shown in Fig. 1, which enlarges capability of such gearing.

In general, the parabolic worm gear pair is characterized in that the worm 1 teeth flanks 3 in the normal - or in the axial cross-section correspond to a part of a generalised higher order parabola defined by equation:

$$y = a_p.b_p \cdot \left(1 - \left(1 - \frac{x}{b_p}\right)^n\right),$$

that the height factor ranges from 1,35 to 1,45, the slope angle $\alpha_c$ of a tangent to the parabola in the pitch point C varies from 75° to 80° and in the point A the slope angle $\alpha_A$ from 55° to 60°, thus determining the parabolic exponent n, which defines teeth flanks 3 curvature with a gradual increase from the tooth tip in the point C to its dedendum in the point A and according to the basic law of gearing this also implies curvature of the path of contact.

## Claims

1. A cylindrical worm gear drive consisting of a worm gear (2) having a plurality of teeth having teeth flanks (4) and a worm having a plurality of tooth having teeth flanks (3) **characterized in that** a part (CA) of said teeth flanks in axial cross-section is a generalized higher order parabola curve (9) been defined by the equation

$$y = a_p . b_p \cdot \left(1 - \left(1 - \frac{x}{b_p}\right)^n\right),$$

where
the coordinate system origin is set to the pitch point (C) of a pitch circle of said worm gear teeth;

$x, y$ are the coordinates, $x$ being a coordinate in the worm's axial direction;
$a_p$ is a worm tooth height factor (12), where the actual height of a top of said parabola curve (9) is $a_p$ multiplied by $b_p$;
$b_p$ is a worm tooth size factor (13) and also the height of teeth, where $b_p$ equals twice a tooth module ($m$); and
$n$ is the exponent of said parabolic function.

## Patentansprüche

1. Zylinderschneckentrieb bestehend aus einem Schneckentrieb (2) mit mehreren Zähnen mit Zahnflanken (4) und einer Schnecke mit mehreren Zähnen mit Zahnflanken (3), **dadurch gekennzeichnet, dass** ein Teil (CA) der Zahnflanken im Axialquerschnitt eine durch folgende Gleichung definierte verallgemeinerte Parabelkurve (9) höherer Ordnung ist:

$$y = a_p . b_p \cdot \left(1 - \left(1 - \frac{x}{b_p}\right)^n\right),$$

wobei
der Ursprung des Koordinatensystems auf den Wälzpunkt (C) eines Teilkreises der Schneckenzähne eingestellt ist;

x, y die Koordinaten sind, wobei x eine Koordinate in der Axialrichtung der Schnecke ist;
$a_p$ ein Schneckenzahn-Höhenfaktor (12) ist, wobei die tatsächliche Hö- he eines Hochpunkts der Parabelkurve (9) $a_p$ multipliziert mit $b_p$ ist;
$b_p$ ein Schneckenzahn-Größenfaktor (13) und ferner die Höhe der Zäh- ne ist, wobei $b_p$ gleich zweimal einem Zahnmodul ($m$) ist; und
$n$ der Exponent der Parabelfunktion ist.

## Revendications

1. Entraînement par engrenage à vis sans fin cylindrique consistant en un engrenage à vis sans fin (2) comprenant une pluralité de dents pourvues de flancs de dent (4) et une vis sans fin comprenant une pluralité de dents pourvues de flancs de dent (3), **caractérisé en ce qu'**une partie (CA) desdits flancs de dent, vus en section transversale axiale, est un arc de parabole généralisée d'ordre supérieur (9) définie par l'équation

$$y = a_p . b_p \cdot \left( 1 - \left( 1 - \frac{x}{b_p} \right)^n \right)$$

où

l'origine du système de coordonnées est fixé au point primitif (C) d'un cercle primitif desdites dents de l'engrenage à vis sans fin ;

$x, y$ sont les coordonnées, $x$ étant une coordonnée dans la direction axiale de la vis sans fin ;

$a_p$ est un facteur de hauteur de dents de vis sans fin (12), où la hauteur réelle d'un sommet dudit arc de parabole (9) est $a_p$ multiplié par $b_p$ ;

$b_p$ est un facteur de dimension de dents de vis sans fin (13), et également la hauteur des dents, où $b_p$ est égal au double d'un module de dent ($m$) ; et

$n$ est l'exposant de ladite fonction parabolique.

**Partial Cross-section K**

**Cross-section H-H**

Figure 1

EP 2 126 408 B1

Figure 2

Figure 3

*the rolling line holds for c = 0

Figure 4

EP 2 126 408 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2103537 B1

**Non-patent literature cited in the description**

- Niemann's and Winter's book Maschinenelemente. vol. 3